# EUROPEAN PATENT APPLICATION

(11) **EP 3 379 706 A1**
(43) Date of publication of application: **26.09.2018**
(21) Application number: 18159391.4
(22) Date of filing: 01.03.2018
(51) Int. Cl.: H02K 49/06, H02K 49/10

(54) **AN ELECTRICAL MACHINE**

(30) Priority: 23.03.2017 GB 201704579
(71) Applicant: Rolls-Royce plc, London SW1E 6AT (GB)
(72) Inventor: Shirokov, Vladimir, Derby, Derbyshire DE24 8BJ (GB)
(74) Representative: Rolls-Royce plc

(57) **Abstract**

A permanent magnet electrical machine (30) comprising a first shaft having a rotational axis (34). A second shaft spaced from the first shaft and rotating about the rotational axis. The second shaft comprises magnetic material. A first magnet mounted to the first shaft or aligned with the first shaft to selectively magnetise at least a portion of the first shaft. A second magnet aligned with the second shaft to selectively magnetise at least a portion of the second shaft and thereby to couple the second shaft to the first shaft.

## Description

The present disclosure concerns an electrical machine with a magnetic disconnect, particularly a permanent magnet electrical machine with a magnetic disconnect.

According to a first aspect there is provided a permanent magnet electrical machine comprising:
a first shaft having a rotational axis;
a second shaft spaced from the first shaft and rotating about the rotational axis; the second shaft comprising magnetic material;
a first magnet mounted to the first shaft or aligned with the first shaft to selectively magnetise at least a portion of the first shaft; and
a second magnet aligned with the second shaft to selectively magnetise at least a portion of the second shaft and thereby to couple the second shaft to the first shaft.

Advantageously the electrical machine has no mechanical coupling to the drive source or load, and can be magnetically decoupled. Advantageously the electrical machine is therefore suitable for embedding on the shaft of a gearbox or gas turbine engine which cannot be stopped from rotating in response to a fault. Advantageously there are no moving parts to achieve the decoupling so wear is minimised there are fewer failure mechanisms. Advantageously the electrical machine may be configured as a motor or a generator, or may be configured to act as a motor or a generator in different operating conditions.

The first shaft may comprise a rotor shaft of the electrical machine. The second shaft may comprise a stub shaft. The stub shaft may be part of or mechanically coupled to a gearbox shaft or gas turbine engine shaft.

The first magnet may be a permanent magnet. There may be an array of permanent magnets. The array may be a radial array. Additionally or alternatively the array may be an axial array. The first magnet may be mounted to the first shaft.

The first magnet may be an electromagnet. The second magnet may be an electromagnet. There may be an array of electromagnets. The array may be a radial array. Additionally or alternatively the array may be an axial array. The electromagnet or array of electromagnets may be mounted to the respective shaft. Advantageously electromagnets are only magnetic when energised by an applied current. Advantageously the electrical machine fails safely because it is decoupled from the drive source or load. Advantageously by providing electromagnets on one or both shafts the electrical machine can be decoupled from the drive source or load.

Where the first magnet comprises a permanent magnet the second magnet comprises an electromagnet. Alternatively both the first and second magnets may comprise electromagnets.

The electromagnet or array of electromagnets may be electrically activated by a current source. The current source may be a DC current source. Alternatively the electromagnet or array of electromagnets may be electrically activated by an end-winding of the electrical machine.

The stub shaft may be mechanically coupled to any one of a gas turbine engine; a shaft of a gas turbine engine; a diesel engine; a battery; a supercapacitor; an energy storage system. Advantageously the electrical machine is suitable for magnetic coupling to any type of drive source or load which cannot be stopped when it is desired that the electrical machine stop generating or providing mechanical drive.

There may be an array of permanent magnets mounted to the rotor shaft and a stator positioned radially outside the rotor shaft. Thus the electrical machine may be a radial machine with the stator outside the rotor.

Alternatively there may be an array of permanent magnets mounted to the rotor shaft and a stator positioned radially inside the rotor shaft. Thus the electrical machine may be a radial machine with the stator inside the rotor. The second shaft may be an annular stub shaft. The stub shaft may have a similar inside diameter and outside diameter to the rotor shaft. Advantageously the magnetisable portions of the stub shaft and rotor shaft are axially aligned. The second magnet may be positioned radially inside the stub shaft. Advantageously the stub shaft may have an inside diameter which is larger than the outside diameter of the rotor shaft so the second magnet may be positioned on its radially inside surface. Advantageously the magnetisable portions of the stub shaft and rotor shaft are axially aligned.

Alternatively the electrical machine may be configured as an axial electrical machine.

There may be a magnetically permeable wall positioned between the first shaft and the second shaft. Advantageously the electrical machine can be isolated from the environment in which the drive source or load is located because there is no mechanical coupling.

There may be a vacuum chamber enclosing the first shaft but not enclosing the second shaft or second magnet. Advantageously the vacuum chamber may reduce windage losses from the electrical machine. Advantageously the vacuum chamber may thermally insulate the enclosed part of the electrical machine from the surrounding environment.

The stub shaft may comprise cobalt iron. Advantageously cobalt iron is a material which is magnetisable by an array of electromagnets.

According to a second aspect there is provided a gas turbine engine comprising a permanent magnet electrical machine according to the first aspect. The second shaft may be mechanically coupled to a shaft of the gas turbine engine.

The skilled person will appreciate that except where mutually exclusive, a feature described in relation to any one of the above aspects may be applied mutatis mutandis to any other aspect. Furthermore except where mutually exclusive any feature described herein may be applied to any aspect and/or combined with any other feature described herein.

Embodiments will now be described by way of example only, with reference to the Figures, in which:
Figure 1 is a sectional side view of a gas turbine engine;
Figure 2 is a sectional side view of an electrical machine;
Figure 3 is a sectional side view of an alternative electrical machine;
Figure 4 is a sectional side view of an alternative electrical machine;
Figure 5 is a schematic side view of opposed magnet arrays;
Figure 6 is a schematic side view of alternative opposed magnet arrays;
Figure 7 is a sectional side view of an alternative electrical machine;
Figure 8 is a sectional side view of an alternative electrical machine.

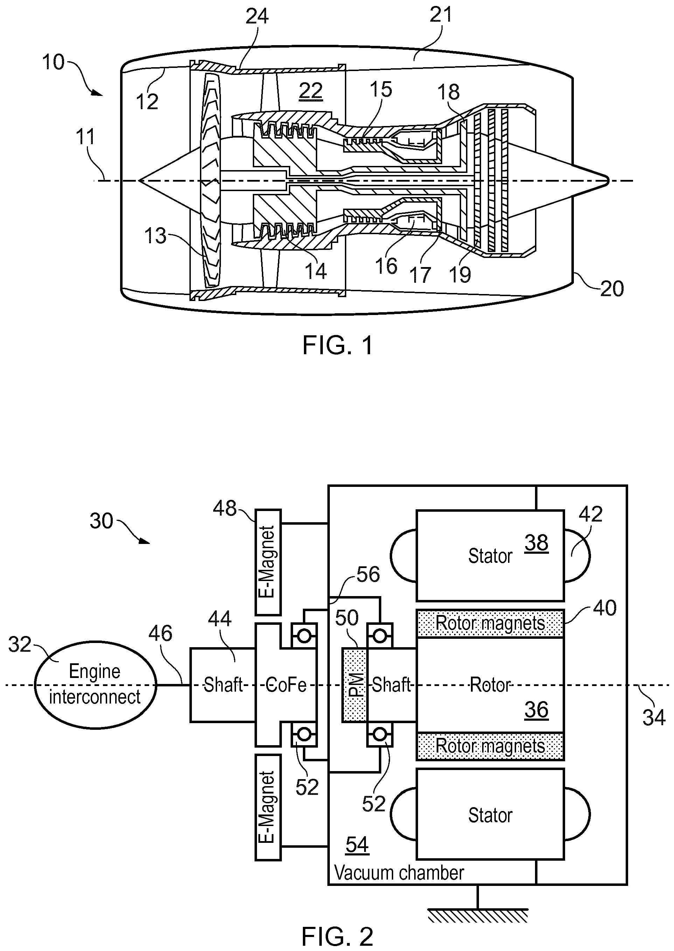

With reference to Figure 1, a gas turbine engine is generally indicated at 10, having a principal and rotational axis 11. The engine 10 comprises, in axial flow series, an air intake 12, a propulsive fan 13, an intermediate pressure compressor 14, a high-pressure compressor 15, combustion equipment 16, a high-pressure turbine 17, an intermediate pressure turbine 18, a low-pressure turbine 19 and an exhaust nozzle 20. A nacelle 21 generally surrounds the engine 10 and defines both the intake 12 and the exhaust nozzle 20.

The gas turbine engine 10 works in the conventional manner so that air entering the intake 12 is accelerated by the fan 13 to produce two air flows: a first air flow into the intermediate pressure compressor 14 and a second air flow which passes through a bypass duct 22 to provide propulsive thrust. The intermediate pressure compressor 14 compresses the air flow directed into it before delivering that air to the high pressure compressor 15 where further compression takes place.

The compressed air exhausted from the high-pressure compressor 15 is directed into the combustion equipment 16 where it is mixed with fuel and the mixture combusted. The resultant hot combustion products then expand through, and thereby drive the high, intermediate and low-pressure turbines 17, 18, 19 before being exhausted through the nozzle 20 to provide additional propulsive thrust. The high 17, intermediate 18 and low 19 pressure turbines drive respectively the high pressure compressor 15, intermediate pressure compressor 14 and fan 13, each by suitable interconnecting shaft.

Other gas turbine engines to which the present disclosure may be applied may have alternative configurations. By way of example such engines may have an alternative number of interconnecting shafts (e.g. two) and/or an alternative number of compressors and/or turbines. Further the engine may comprise a gearbox provided in the drive train from a turbine to a compressor and/or fan.

An electrical machine 30 is shown in Figure 2. Such an electrical machine 30 may be used as a generator within a gas turbine engine 10 to provide electrical power. For example the electrical machine 30 may provide electrical power to pumps or valves on the engine 10. The electrical machine 30 may also be the main aircraft generator which provides power to the airframe. Electrical power generated by the electrical machine 30 may be delivered to an aircraft powered by the engine 10 for cabin systems such as in-seat entertainment.

The electrical machine 30 may be partially mounted to or integral with an interconnecting shaft of the gas turbine engine 10 as will be described in more detail below. Thus the electrical machine 30 may be partially mounted to or integral with the low pressure shaft, between the low pressure turbine 19 and fan 13; or may be partially mounted to or integral with the intermediate pressure shaft, between the intermediate pressure turbine 18 and intermediate pressure compressor 14; or may be partially mounted to or integral with the high pressure shaft, between the high pressure turbine 17 and high pressure compressor 15.

Figure 2 shows an engine interconnect 32 which may be one of the interconnecting shafts of the engine 10. Alternatively the engine interconnect 32 may mechanically couple to an interconnecting shaft of the engine 10. The electrical machine 30 has a rotational axis 34, which may be coincident with the engine rotational axis 11. Alternatively the electrical machine rotational axis 34 may be parallel to or angled with respect to the engine rotational axis 11.

The electrical machine 30 includes a rotor shaft 36 and a stator 38. The rotor shaft 36 forms the rotor of the electrical machine 30. An annular array of permanent magnets 40 is provided on the periphery of the rotor shaft 36, along at least that part of the rotor shaft 36 which forms the rotor of the electrical machine 30. The stator 38 is radially outside the rotor shaft 36 and the array of permanent magnets 40; it is a non-rotating (static) component. The stator 38 includes electrical windings, coils 42.

The electrical machine 30 further includes a stub shaft 44 which is integrally formed with the engine interconnect 32 or is coupled thereto by a coupling shaft 46 or a different mechanical connection. The stub shaft 44 is rotatable about the rotational axis 34 of the electrical machine 30. It is thus axially aligned with the rotor shaft 36. However, there is an axial gap or space between the rotor shaft 36 and the stub shaft 44. Thus there is no mechanical connection between the rotor shaft 36 and the stub shaft 44.

The stub shaft 44 comprises a magnetic material. Alternatively only a portion of the stub shaft 44, specifically a portion closer to the rotor shaft 36 of the electrical machine 30, comprises magnetic material. The magnetic material may comprise cobalt iron. Alternatively it may comprise a different magnetic material. The magnetic material may be laminated to promote flux transfer from the electromagnet 48 to the rotor shaft 36.

The electrical machine 30 also includes one or more electromagnets 48. There may be a plurality of electromagnets 48 arranged in an annular array. The electromagnet 48 or array of electromagnets 48 is aligned with the stub shaft 44, or at least with that portion of the stub shaft 44 which comprises magnetic material. For example, as illustrated in Figure 2, an array of electromagnets 48 radially surrounds the end of the stub shaft 44 which comprises cobalt iron, that is the end of the stub shaft 44 proximal to the rotor shaft 36. The electromagnet 48 or array of electromagnets 48 is a static component; that is it does not rotate.

The electromagnet or electromagnets 48 are only magnetic when an electrical current is passed through them, as is conventional. Consequently the stub shaft 44 is selectively magnetised by the application of current through the electromagnet(s) 48 causing a magnetic circuit to form between the electromagnet(s) 48 and the magnetic material in the stub shaft 44.

There may be an electric current source, for example a DC current source, (not shown) coupled to the electromagnet(s) 48 to supply current thereto and to activate the electromagnet(s) 48. Alternatively the electromagnet(s) 48 may be electrically activated by an end-winding of the coils 42 of the stator 38. As will be apparent to the skilled reader, rectifiers and/or transformers may be provided to change AC to DC current.

There is a permanent magnet 50 coupled to or integrally formed with part of the rotor shaft 36. Specifically the permanent magnet 50 is provided on the end of the rotor shaft 36 which is proximal to, but spaced from, the stub shaft 44. For example the permanent magnet 50 may be provided on the end face of the rotor shaft 36. The permanent magnet 50 is separate to the permanent magnets 40 which are also mounted to or integral with the rotor shaft 36. The permanent magnet 50 is preferably annular with at least one circumferential portion which has lower magnetic strength or reversed polarity. Alternatively the circumferential portion which generates a weaker magnetic field may be replaced by a non-magnetic insert. By providing a portion of weaker field or which is non-magnetic the magnetised portion of the stub shaft 44 cogs with the permanent magnet 50. The relative magnetic strength of the circumferential portions governs how pronounced the cogging effect is.

When the stub shaft 44 is magnetised it magnetically couples to the permanent magnet 50. The stub shaft 44 and rotor shaft 36 are thereby constrained to rotate in synchronicity at the same rate and in the same direction. Conversely, the stub shaft 44 is not magnetised when the electromagnet(s) 48 receive no current so that no magnetic couple is formed between the stub shaft 44 and permanent magnet 50. Consequently the stub shaft 44 and rotor shaft 36 rotate independently.

The permanent magnet electrical machine 30 functions in conventional fashion as a generator or motor. In operation of the electrical machine 30 as a generator the rotation of the rotor shaft 36 and the consequent rotating magnetic field produced by the permanent magnets 40 induces a current in the coils 42 of the stator 38. To stop a permanent magnet electrical machine from generating, in response to a fault or otherwise, it is necessary to stop the rotor from rotating since the magnetism of the permanent magnets cannot be reversibly switched off. If the electrical machine is driven from an interconnecting shaft of a gas turbine engine 10 it is not possible to stop the shaft from rotating without shutting down the engine 10.

The disclosed electrical machine 30 overcomes this problem by virtue of a magnetic disconnect or magnetic clutch. In normal operation current is supplied to the electromagnet(s) 48, the end portion of the stub shaft 44 is magnetised and consequently the stub shaft 44 is magnetically coupled to the rotor shaft 36 through the permanent magnet 50. Thus in generator mode the rotor shaft 36 is caused to rotate by its magnetic coupling to the stub shaft 44 which itself is caused to rotate by the engine interconnect 32. In motor mode the rotor shaft 36 is caused to rotate by the applied current from the stator 38 and is delivered to the engine interconnect 32 via the magnetic coupling to the stub shaft 44.

However, where a fault occurs the electrical machine 30 can be stopped from generating without having to stop the engine shaft rotating. Thus rotation of the engine interconnect 32, and the shaft of the engine 10, can be decoupled from rotation of the rotor of the electrical machine 30 by the disclosed magnetic disconnect. In generator mode the engine interconnect 32 provides the drive for the rotation of the electrical machine 30.

Where a fault occurs the electric current provided to the electromagnet(s) 48 is switched off. This causes the magnetic coupling between the stub shaft 44 and the rotor shaft 36 to be broken. Since the stub shaft 44 and rotor shaft 36 are no longer magnetically coupled, and do not have a mechanical couple, the shafts 36, 44 are magnetically disconnected. No mechanical drive is now provided to the rotor shaft 36 which will decelerate to stationary, at a rate determined by its mass, and consequently its inertia, and the inherent eddy currents in the rotor shaft 36 which produce a braking torque. The level of eddy currents, and therefore the braking torque, can be enhanced by selecting suitable materials for the rotor shaft 36. Advantageously the current supply to the electromagnet(s) 48 can be stopped instantaneously so the stub shaft 44 and rotor shaft 36 can be decoupled very fast (almost instantly). The electrical machine 30 can therefore be stopped quickly, in a period determined by the rate of deceleration.

Since the rotor shaft 36 is no longer rotating the magnetic field generated by the permanent magnets 40 no longer rotates and so no current is induced in the coils of the stator 38. Therefore the electrical machine 30 stops generating electricity but the stub shaft 44 and the engine interconnect 32 to which it is mechanically coupled continue to rotate. Advantageously the stub shaft 44 and/or engine interconnect 32 may be an interconnecting shaft of the engine 10 because it is not necessary to stop, break or interrupt the stub shaft 44 in order to stop the electrical machine 30 generating. Advantageously the magnetic disconnect is arranged so that it must be activated, by applying electric current to the electromagnet(s) 48, in order to couple. Therefore its default condition is decoupled which is safer.

Advantageously because there is no mechanical couple there are no moving parts so wear is minimised. No moving parts also means that there are fewer failure mechanisms since there are no parts which can fail to move when instructed, to move when not instructed, or to rub against or clash with other parts.

Optionally an anti-rotation feature may be provided on the rotor shaft 36 in order to assist in retarding its rotational speed when magnetically disengaged from the stub shaft 44. For example saliency or a reluctance feature could be provided to give a small holding torque.

Each of the rotor shaft 36 and stub shaft 44 may be mounted in separate bearings 52. Each bearing 52 may be referenced to a common stationary frame of reference, as illustrated in Figure 2. Alternatively one or more set of bearings 52 may be referenced to a different rotating frame of reference, for example another interconnecting shaft of the engine 10.

Parts of the electrical machine 30 may be enclosed within a vacuum chamber 54. Advantageously the vacuum chamber 54 may reduce windage losses of the electrical machine 30. In some cases the windage losses may be reduced to such low levels that they are effectively eliminated. Advantageously the vacuum chamber 54 may also thermally insulate the enclosed part of the electrical machine 30 from the surrounding environment.

There may be a magnetically permeable wall 56 between the rotor shaft 36 and the stub shaft 44. The magnetically permeable wall 56 may be a wall of the vacuum chamber 54. Advantageously the electrical machine 30 may be used in applications where it must be enclosed, for example in a nuclear power plant. Advantageously the machine 30 can be magnetically coupled through the wall to transmit torque and can be magnetically decoupled when it is necessary to stop generating. The electrical machine 30 can also be used, therefore, in applications where the stub shaft 44 and components to which it is mechanically coupled need a different environment to the rotor shaft 36, stator 38 and rotor magnets 40. For example, where one part of the machine 30 needs to be bathed in fluid, oil or another coolant, and the other part may be damaged by the fluid or where one part of the machine needs to be cooler than the other part.

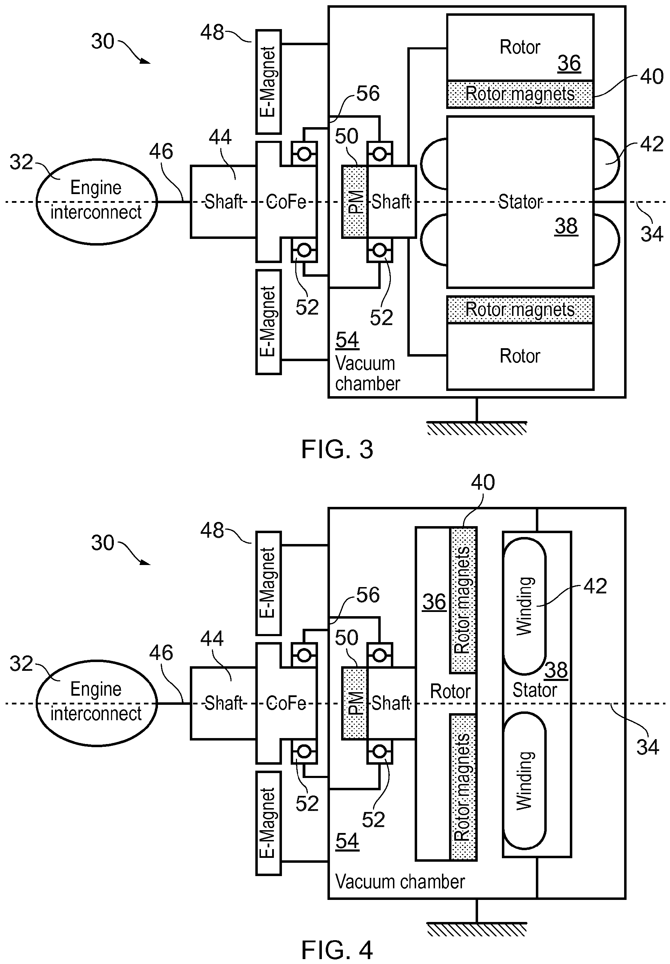

Figure 3 shows an alternative arrangement of the electrical machine 30 in the so-called "inside out" configuration. In this arrangement the rotor shaft 36 is annular and the stator 38 is radially inside the rotor shaft 36. The permanent magnet 50 may be mounted to an extension to the rotor shaft 36 which is axially aligned with part of the stator 38. Alternatively the permanent magnet 50 may be mounted on the periphery of the annular rotor shaft 36, at a larger diameter, and the stub shaft 44 be arranged to have complementary shape.

Figure 4 shows another alternative arrangement of the electrical machine 30. In this arrangement the electrical machine 30 is an axial machine instead of the radial machines shown in Figure 2 and Figure 3. Instead of one of the rotor 36 and stator 38 being radially inside the other, the stator 38 and rotor 36 are substantially coextensive in the radial direction from the axis 34. The array of permanent magnets 40 on the rotor 36 are positioned on the face that is proximal to but axially spaced from the stator 38. Similarly the windings 42 are positioned on the face of the stator 38 which is proximal to but axially spaced from the rotor 36.

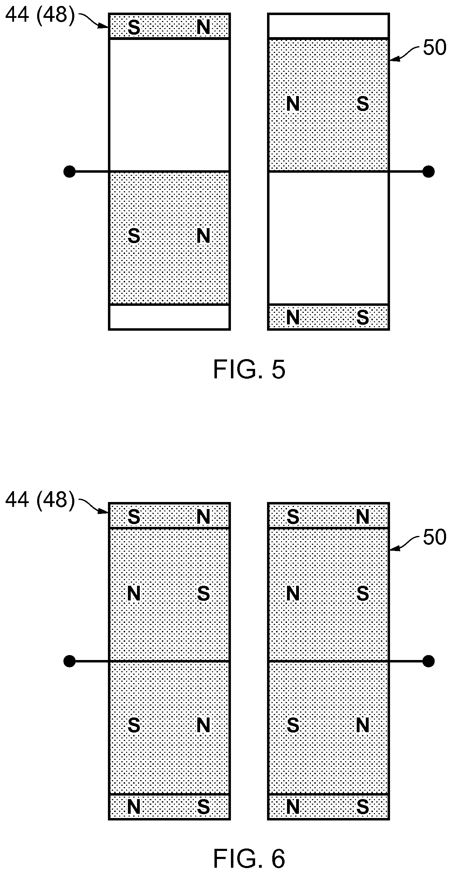

The array of electromagnets 48 may be an axial or a radial array. The electromagnets 48 may all be arranged in the same orientation, for example north towards the stub shaft 44 and south away from it or vice versa. In this configuration there may be non-magnetic portions between the electromagnets 48. This arrangement is shown in Figure 5. The end of the stub shaft 44 assumes the same magnetic pattern as the electromagnet array 48 which therefore cogs with the corresponding pattern in the array of permanent magnets 50. Alternatively they may be arranged in an alternating array so that alternate electromagnets 48 have their north poles and south poles towards the stub shaft 44 as shown in Figure 6. In this configuration there may optionally be non-magnetic portions between the electromagnets 48.

Similarly the permanent magnet 50 may be replaced by an array of permanent magnets 50. These may be arranged as an annular array on or around the end of the rotor shaft 36. The permanent magnets 50 in the array may all have their poles in the same orientation or may form an alternating array.

As is shown in Figure 5 and Figure 6 the arrays of permanent magnets 50 and electromagnets 48 may be arranged to form an attractive, a repulsive, or both an attractive and repulsive coupling. In Figure 5 a repulsive coupling is shown where the north poles of one array are repulsed by the north poles of the other array until the equilibrium position shown is attained. In an attractive coupling a north pole in one array aligns with a south pole of the other array. Figure 6 is both attractive and repulsive because opposite poles attract axially but like poles in opposite arrays repel circumferentially.

Although the electrical machine 30 has been described in the context of an engine shaft it may alternatively be mounted on a gearbox shaft. For example, it may be mounted on the input or output shaft of a gearbox in the gas turbine engine 10. The gearbox may be an accessory gearbox. The completion of the magnetic circuit between the stub shaft 44 and the rotor shaft 36 by application of current to the electromagnets 48 remains the same. In this case the engine interconnect 32 is more accurately a gearbox interconnect 32.

Although the stub shaft 44 has been described as axially spaced from the rotor shaft 36 it may alternatively be radially spaced. At least an end part of the stub shaft 44 may be annular with an internal diameter larger than the diameter of the rotor shaft 36. The annular portion of the stub shaft 44 can therefore be arranged to surround the rotor shaft 36 with a radial gap between them. Alternatively the end of the rotor shaft 36 may be annular with an internal diameter larger than the diameter of the stub shaft 44 so that the annular portion of the rotor shaft 36 can be arranged to surround the stub shaft 44 with a radial gap between them.

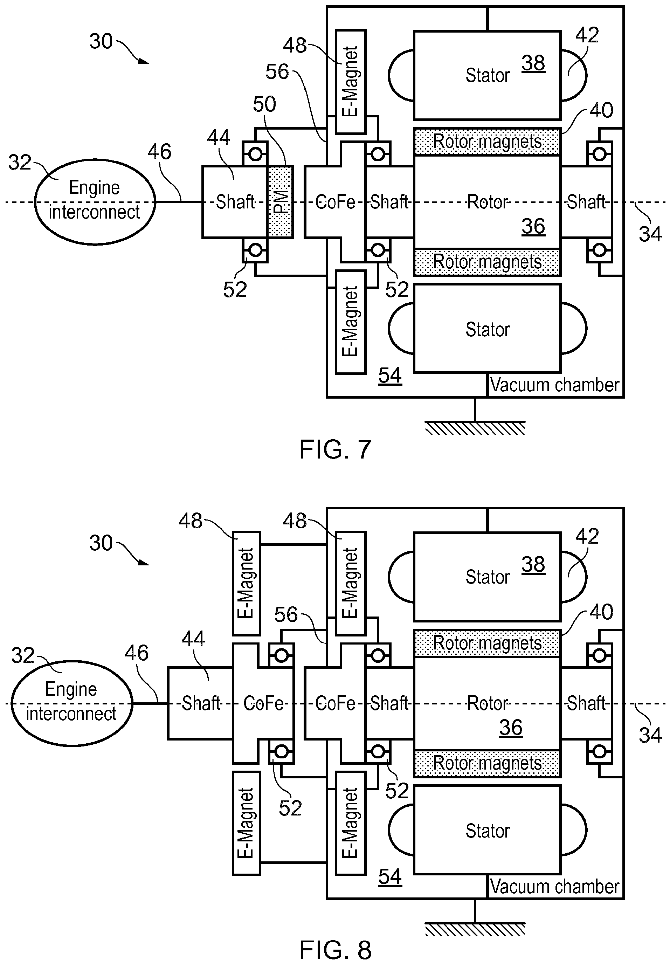

A further alternative electrical machine 30 is shown in Figure 7. It is a radial electrical machine 30 similar to that shown in Figure 2. However, the permanent magnet 50 or array of permanent magnets 50 is mounted to the stub shaft 44. The end of the rotor shaft 36 which is proximal to, but axially spaced from, the stub shaft 44 comprises a magnetic material. The magnetic material may comprise cobalt iron. Alternatively it may comprise a different magnetic material. The electromagnet 48 or array of electromagnets 48 are therefore axially aligned with the magnetic portion of the rotor shaft 36 instead of with the stub shaft 44.

The electrical machine 30 operates in the same manner as described above. That is when the electromagnets 48 are magnetised by the application of current through them they magnetise the end of the rotor shaft 36. Thus a magnetic couple is formed between the stub shaft 44 and the end of the rotor shaft 36. When a fault occurs the magnetic couple can be broken by switching off the current to the electromagnets 48 to demagnetise the end of the rotor shaft 36. Since the rotor shaft 36 is no longer driven by the stub shaft 44 it slows to a stop. Therefore the electrical machine 30 stops generating.

The arrangement described with respect to Figure 7, where the permanent magnet 50 and electromagnet 48 are swapped, is also applicable to the inside out radial electrical machine 30 shown in Figure 3 and the axial electrical machine 30 shown in Figure 4.

Figure 8 shows a further alternative electrical machine 30. Again it is a radial electrical machine 30 shown with the rotor shaft 36 radially surrounded by the stator 38 but it is also applicable to the inside out configuration shown in Figure 3 and to the axial electrical machine 30 shown in Figure 4. In Figure 8 each of the stub shaft 44 and the end of the rotor shaft 36 facing it comprise magnetic material, for example cobalt iron. Axially aligned with each is an electromagnet 48, for example an array of electromagnets 48 surrounding each shaft 36, 44.

To couple the stub shaft 44 and rotor shaft 36 both electromagnets 48 must receive current to magnetise both shafts 36, 44. To decouple the shafts 36, 44 current can be removed from either or both of the electromagnets 48. Advantageously this provides a redundancy in the failure case since if current gets latched to one electromagnet 48 the magnetic couple can still be broken by stopping the current to the other electromagnet 48.

Although the electrical machine 30 has been described in the context of a gas turbine engine 10 to power an aircraft it is also applicable where the gas turbine engine 10 is used to power a marine vessel or land-based power plant. The electrical machine 30 is also suitable for use with a wind turbine or tidal turbine; with a diesel generator; and as a power pack for a rail vehicle. For example the electrical machine 30 can be used as a torque limiter in the drive train of a rail vehicle.

The electrical machine 30 can also be used as a generator where any unstoppable source is used as the mechanical driving force. For example, it can be used as a generator coupled to a dam at a reservoir or river where it is not possible to stop the water flowing.

It will be understood that the invention is not limited to the embodiments above-described and various modifications and improvements can be made without departing from the concepts described herein. Except where mutually exclusive, any of the features may be employed separately or in combination with any other features and the disclosure extends to and includes all combinations and sub-combinations of one or more features described herein.

## Claims

1. A permanent magnet electrical machine (30) comprising:
• a first shaft having a rotational axis (34);
• a second shaft spaced from the first shaft and rotating about the rotational axis (34); the second shaft comprising magnetic material;
• a first magnet mounted to the first shaft or aligned with the first shaft to selectively magnetise at least a portion of the first shaft; and
• a second magnet aligned with the second shaft to selectively magnetise at least a portion of the second shaft and thereby to couple the second shaft to the first shaft.

2. A permanent magnet electrical machine (30) as claimed in claim 1 wherein the first shaft comprises a rotor shaft (36) of the electrical machine (30).

3. A permanent magnet electrical machine (30) as claimed in claim 1 or claim 2 wherein the second shaft comprises a stub shaft (44).

4. A permanent magnet electrical machine (30) as claimed in any preceding claim wherein the first magnet is a permanent magnet (50).

5. A permanent magnet electrical machine (30) as claimed in any of claims 1 to 3 wherein the first magnet is an electromagnet (48).

6. A permanent magnet electrical machine (30) as claimed in any preceding claim wherein the second magnet is an electromagnet (48).

7. A permanent magnet electrical machine (30) as claimed in any preceding claim further comprising an array of first magnets and/or an array of second magnets.

8. A permanent magnet electrical machine (30) as claimed in claim 7 wherein the array is a radial array.

9. A permanent magnet electrical machine (30) as claimed in any of claims 5 to 8 wherein the electromagnet (48) or array of electromagnets (48) is electrically activated by a current source or by an end-winding (42) of the permanent magnet electrical machine (30).

10. A permanent magnet electrical machine (30) as claimed in any of claims 3 to 9 wherein the stub shaft (44) is mechanically coupled to any one of a gas turbine engine (10); a shaft of a gas turbine engine (10); a diesel engine; a battery; a supercapacitor; an energy storage system.

11. A permanent magnet electrical machine (30) as claimed in any of claims 2 to 10 further comprising an array of permanent magnets (40) mounted to the rotor shaft (36), and a stator (38) positioned radially outside the rotor shaft (36) or positioned radially inside the rotor shaft (36).

12. A permanent magnet electrical machine (30) as claimed in any of claims 1 to 10 wherein the electrical machine (30) is configured as an axial electrical machine.

13. A permanent magnet electrical machine (30) as claimed in any preceding claim further comprising a magnetically permeable wall (56) positioned between the first shaft and the second shaft.

14. A permanent magnet electrical machine (30) as claimed in any preceding claim further comprising a vacuum chamber (54) enclosing the first shaft but not enclosing the second shaft or second magnet.

15. A gas turbine engine (10) comprising a permanent magnet electrical machine (30) as claimed in any preceding claim wherein the second shaft is mechanically coupled to a shaft of the gas turbine engine (10).
